(19) Europäisches Patentamt
European Patent Office
Office européen des brevets

(11) **EP 2 037 457 A2**

(12) **EUROPEAN PATENT APPLICATION**

(43) Date of publication:
**18.03.2009 Bulletin 2009/12**

(51) Int Cl.:
***G11B 7/135*** *(2006.01)* ***G11B 7/09*** *(2006.01)*

(21) Application number: **08104115.4**

(22) Date of filing: **27.05.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **13.09.2007 KR 20070093168**

(71) Applicant: **Samsung Electronics Co., Ltd.**
**Suwon-si, Gyeonggi-Do (KR)**

(72) Inventors:
• **Park, Soo Han**
  **1161, Pungdeokcheon-dong, Yongin-si, Gye (KR)**
• **Ichiro, Morishita**
  **Kanagawa Yokohamasi (JP)**
• **Park, Seong Su**
  **Suwon-Si, Gyeonggi-do (KR)**

(74) Representative: **Van Someren, Petronella F. H. M.**
**Arnold & Siedsma**
**Sweelinckplein 1**
**2517 GK The Hague (NL)**

(54) **Optical pickup**

(57)     An optical pickup to improve countermeasure capability of a disc by allowing polarized light of a spot on the disc to become elliptically polarized light includes a light source (20) to emit semiconductor laser light, an objective lens (30) to condense the light emitted from the light source and form an optical spot on a disc, and a wave plate (58) which is rotated such that the spot formed on the disc becomes elliptically polarized light.

FIG. 1

EP 2 037 457 A2

**Description**

BACKGROUND OF THE INVENTION

1. Field of the Invention

The present general inventive concept relates to an optical pickup, and, more particularly, to an optical pickup to improve countermeasure capability of a disc by allowing polarized light of a spot on the disc to become elliptically polarized light.

2. Description of the Related Art

As a video/audio medium has developed, a disc which is capable of recording/storing high-quality video information and audio information over a long period of time has been developed and commercialized.

Such a disc is a recording medium which can record and/or reproduce information such as a video, an audio and a document by forming numerous pits in a surface thereof and changing a reflection of laser light. Conventionally, an optical disc such as a compact disc (CD) or a digital versatile disc (DVD) has been mainly used. However, recently, as a recording capacity of the disc gradually has reached a limitation, a new disc such as a blu-ray disc (BD) recordable/rewritable or a high density DVD (HD DVD) capable of recording information of a large capacity, for example, several tens of Gbyte or more, has been developed and has come into wide use.

The capacity of the information which can be recorded on various types of discs is inversely proportional to a size of an optical spot formed on the surface of the disc. The size S of the optical spot is decided by a wavelength $\lambda$ of a laser light and a numerical aperture (NA) of an objective lens as expressed by Equation 1.

$$\text{Equation 1}$$

$$S \propto k*\lambda/NA$$

where, k is a constant depending on an optical system and generally has a value of 1 to 2.

Accordingly, in order to record a large amount of information on a disc, the size S of an optical spot formed on the disc should be reduced. In order to reduce the size S of the optical spot, the wavelength $\lambda$ of the laser light should be reduced or the NA should be increased as expressed by Equation 1.

That is, as the capacity of the disc is increased, a light source having a short wavelength and an objective lens having a high NA should be used. For example, in the CD, a near infrared ray having a wavelength of 780 nm and an objective lens having a NA of about 0.45 are used. In the DVD having a recording capacity which is about 6 to 8 times that of the CD, red light having a wavelength of 650 nm (or 630 nm) and an objective lens having a NA of about 0.6 (0.65 in a recordable type) are used. In the BD, light having a short wavelength (405 to 408 nm), that is, blue light, is used as a light source and an objective lens having a numerical aperture of about 0.85 is used.

An optical pickup irradiates laser light onto a signal recording layer of a disc to record information or receives light reflected from the signal recording layer of the disc to reproduce information recorded on the disc by a non-contact method. A quality of the signal reproduced at a time of recording/reproduction of the disc is determined by a shape of a spot formed on the disc. The size of the optical spot is small and the shape thereof is circular.

Japanese Unexamined Patent Application Publication No. 2000-331369 or 2004-63069 relates to conventional optical pickups that correct an angle of a half wave plate for changing a polarization component of incident light according to an angle of a laser diode for generating laser light and condenses a spot on a disc passing through a quarter wave plate to circularly polarized light such that ellipticity of 90% or more is maintained in the quarter wave plate, in order to minimize the size of the spot on the disc.

However, in the conventional optical pickup, which combines the half wave plate and the quarter wave plate to allow a polarization component of the spot on the disc to become the circularly polarized light instead of linearly polarized light generated by the laser diode in order to minimize the size of the spot on the disc, emission angle characteristics of the laser diode and influence of birefringence of the disc are not considered. In a case of an actual semiconductor laser, an aspect ratio may be generated due to a difference in emission angle and thus a diameter ratio of the spot on the disc may be a value other than 1. Thus, a variety of different standards exist in the market. In addition, in a situation in which compatibility is not ensured, selecting various types of discs and store information therein is difficult.

SUMMARY OF THE INVENTION

The present general inventive concept provides an optical pickup to adjust an angle of a wave plate and to allow polarized light of a spot on a disc to become elliptically polarized light instead of circularly polarized light such that a diameter ratio of the spot on the disc becomes 1, thereby improving countermeasure capability of the disc.

The present general inventive concept also provides an optical pickup to reduce influence of a light intensity distribution that includes a wave plate that is rotated to change polarized light to elliptically polarized light such that a shape of a spot formed on a disc is approximated to a circular shape. Accordingly, countermeasure capability of a general or birefringent disc can be improved. A special optical element or an expensive optical system does not need to be used to improve countermeasure capability of the birefringent disc and cost competitiveness or mass production yield can be improved.

Additional aspects and/or utilities of the present general inventive concept will be set forth in part in the description which follows and, in part, will be obvious from the description, or may be learned by practice of the general inventive concept.

The foregoing and/or other aspects and utilities of the general inventive concept may be achieved by providing an optical pickup including a light source to emit semiconductor laser light, an objective lens to condense the light emitted from the light source and form an optical spot on a disc, and a wave plate which is rotated such that the spot formed on the disc becomes elliptically polarized light.

The objective lens may have a numerical aperture (NA) of 0.65 or more.

The wave plate may be a half wave plate of which an optic axis is rotated such that a diameter ratio of the spot formed on the disc becomes 1.

The half wave plate may be provided on a light traveling path such that the optic axis thereof is maintained at a predetermined angle with respect to a polarization axis of the light incident to the disc.

The predetermined angle may be substantially 30˚ or 60˚.

A junction surface of the light source may be set to be perpendicular to an information track recorded on the disc,

The wave plate may be a quarter wave plate of which an optic axis is rotated such that a diameter ratio of the spot formed on the disc becomes 1.

The quarter wave plate may be mounted at an angle greater than 45˚ and less than 90˚ with respect to the junction surface of the light source.

The quarter wave plate may be mounted at an angle greater than 45˚ and less than [45+0.05/(0.9NA-0.48)×90]˚ with respect to the junction surface of the light source, wherein NA is a numerical aperture.

The foregoing and/or other aspects and utilities of the general inventive concept may also be achieved by providing an optical pickup including a wave plate having an adjustable angle to allow polarized light of a spot on a disc to become elliptically polarized light, wherein a diameter ratio of the spot on the disc becomes substantially one.

The wave plate may be rotated to change polarized light to the elliptically polarized light such that a shape of the spot formed on the disc is approximated to a circular shape.

The foregoing and/or other aspects and utilities of the general inventive concept may also be achieved by providing a method of forming optical spots on a disc, the method including detecting a tracking signal error through diffraction and division of light into a plurality of light beams including a main light and a sub light, changing the plurality of light beams to parallel light beams, guiding the parallel light beams to an objective lens, and changing the parallel light beams to circularly polarized light beams through the objective lens to form the optical spots on the disc.

The foregoing and/or other aspects and utilities of the general inventive concept may be achieved by providing a computer-readable recording medium having embodied thereon a computer program to execute a method, wherein the method including detecting a tracking signal error through diffraction and division of light into a plurality of light beams including a main light and a sub light, changing the plurality of light beams to parallel light beams, guiding the parallel light beams to an objective lens, and changing the parallel light beams to circularly polarized light beams through the objective lens to form optical spots on a disc.

BRIEF DESCRIPTION OF THE DRAWINGS

These and/or other aspects and utilities of the present general inventive concept will become apparent and more readily appreciated from the following description of the embodiments, taken in conjunction with the accompanying drawings of which:

FIG. 1 is a schematic perspective view illustrating an optical configuration of an optical pickup according to an embodiment of the present general inventive concept;

FIG. 2 is a plan view illustrating the optical pickup according to the embodiment of FIG. 1;

FIG. 3 is a view illustrating a state of focusing polarized light when a light beam incident to an objective lens having a low numerical aperture (NA) vibrates in an x direction according to an embodiment of the present general inventive concept;

FIG. 4 is a view illustrating a state of focusing polarized light when a light beam incident to an objective lens having a high NA vibrates in the x direction according to an embodiment of the present general inventive concept;

FIG. 5 is a view illustrating a state of focusing polarized light when a light beam incident to an objective lens having a low NA vibrates in a z direction according to an embodiment of the present general inventive concept;

FIG. 6 is a view illustrating a state of focusing polarized light when a light beam incident to an objective lens having a high NA vibrates in the z direction according to an embodiment of the present general inventive concept;

FIG. 7 is a graph illustrating a spot diameter (FWHM) ratio in a case where an intensity distribution of incident light is influenced by emission angle characteristics of a semiconductor laser according to an embodiment of the present general inventive concept; and

FIG. 8 is a table illustrating a spot diameter (FWHM) ratio in the case where an intensity distribution of incident light is influenced by emission angle characteristics of a semiconductor laser according to an embodiment of the present general inventive concept; and

FIG. 9 illustrates a method of forming optical spots on a disc according to an embodiment of the present general inventive concept.

DETAILED DESCRIPTION OF THE PREFERRED EMBODIMENTS

Reference will now be made in detail to embodiments of the present general inventive concept, examples of which are illustrated in the accompanying drawings, wherein like reference numerals refer to the like elements throughout. The embodiments are described below to explain the present general inventive concept by referring to the figures.

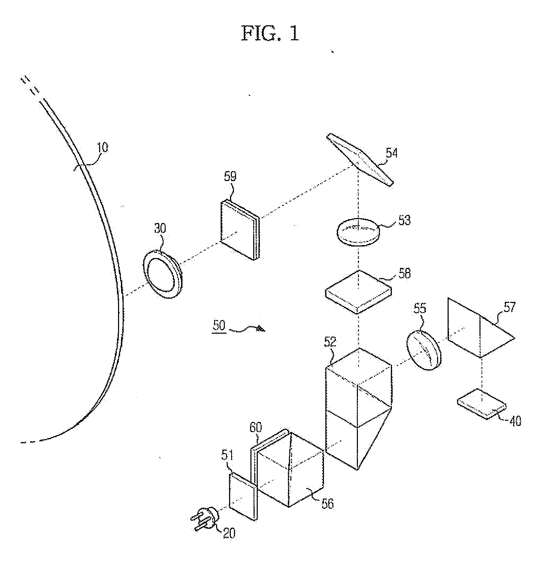

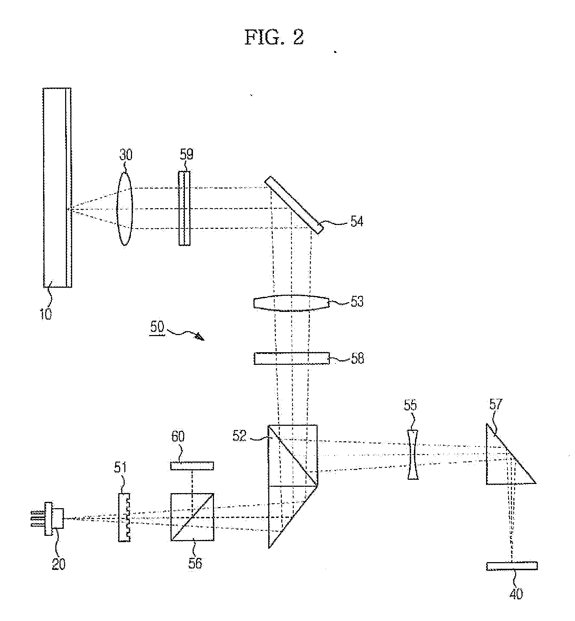

FIG. 1 is a schematic perspective view illustrating an optical configuration of an optical pickup according to an embodiment of the present general inventive concept, and FIG. 2 is a plan view illustrating the optical pickup according to the embodiment of Fig. 1. The optical pickup irradiates laser light onto a signal recording layer of a disc to record information or receives light reflected from the signal recording layer of the disc to reproduce information recorded on the disc by a non-contact method.

In FIGS. 1 and 2, the optical pickup according to an embodiment of the present general inventive concept includes a disc 10 of the DVD standard, a light source 20 to emit laser light having a wavelength corresponding to a format of the disc 10, an objective lens 30 to condense the light emitted from the light source 20 and form an optical spot on a signal recording layer of the disc 10, an optical detector 40 to receive the light, which is condensed onto the disc 10 by the objective lens 30 and is reflected from the disc 10, and detect an information signal and/or an error signal, and an optical path changer 50 to change a traveling path of the light.

The disc 10 is, for example, an optical disc of the DVD standard among various types of discs having different wavelengths and different recording densities.

The light source 20 emits, for example, light of a predetermined wavelength range, that is, a red wavelength range satisfying the DVD standard, for example, light having a wavelength of 650 nm (or 630 nm).

The objective lens 30 has, for example, a numerical aperture (NA) satisfying the DVD standard, that is, a NA of about 0.65.

If the light source 20 emits the light of the red wavelength range and the objective lens 30 has a NA of 0.65, the optical pickup according to an embodiment of the present general inventive concept can record and/or reproduce data on/from the disc 10 of the DVD standard.

The optical detector 40 can be a photodiode IC to receive the light reflected from a surface (the signal recording layer) of the disc 10 and detect the information signal and/or the error signal.

The optical path changer 50 guides the light emitted from the light source 20 toward the objective lens 30 and guides the light reflected from the disc 10 toward the optical detector 40. The optical path changer 50 includes a grating 51 to divide the light emitted from the light source 20 into three light beams, a polarized light beam splitter 52 to change a traveling path of the light according to a polarization direction, a collimating lens 53 to change the divergent light passing through the polarized light beam splitter 52 to parallel light, a reflection mirror 54 to change the traveling path of the light, an astigmatism lens 55 to generate astigmatism to detect a focus error signal by an astigmatism method, a first beam splitter 56 which is mounted between the grating 51 and the polarized light beam splitter 52 to transmit the light passing through the grating 51 to the polarized beam light splitter, and a second beam splitter 57 which is mounted, for example, between the astigmatism lens 55 and the optical detector 40 to transmit the light passing through the astigmatism lens 55 to the optical detector 40.

The grating 51 is a light division diffraction element to divide the light emitted from the light source 20 into 0 order light (main light) and $\pm$1st order light (sub light) to detect a tracking error signal by a 3-beam method or a differential push pull (DPP) method.

The grating 51 can obtain a reproduction signal from a detection signal of the 0 order light reflected from the optical disc 10 and obtain the tracking error signal by a calculation of the detection signals of the 0 order light and the $\pm$1st order light reflected from the optical disc 10.

The optical path changer 50 further includes a half wave plate 58 which is mounted between the polarized light beam splitter 52 and the collimating lens 53 to change a polarization component of incident light, a quarter wave plate 59 which is mounted between the reflection mirror 54 and the objective lens 30 to change the polarization component of the light incident to the objective lens 30, and a feedback photodiode 60 to control an output value of the light emitted from the light source 20.

In the case of using the objective lens 30 having a NA of 0.65, the half wave plate 58 rotates the polarization component of the incident light by about 30˚ (or 60˚) to allow the optical spot formed on the disc 10 to become elliptically polarized light instead of circularly polarized light. In this case, ellipticity is set such that a spot diameter (FWHM) ratio becomes 1.

The quarter wave plate 59 is configured such that a thickness thereof corresponds to a 1/4 wavelength. The quarter wave plate 59 is an optical component to change linearly polarized light to circularly polarized light or changes circularly polarized light to the linearly polarized light, using birefringence.

Hereinafter, an operation and an effect of the optical pickup having the above-described configuration will be described.

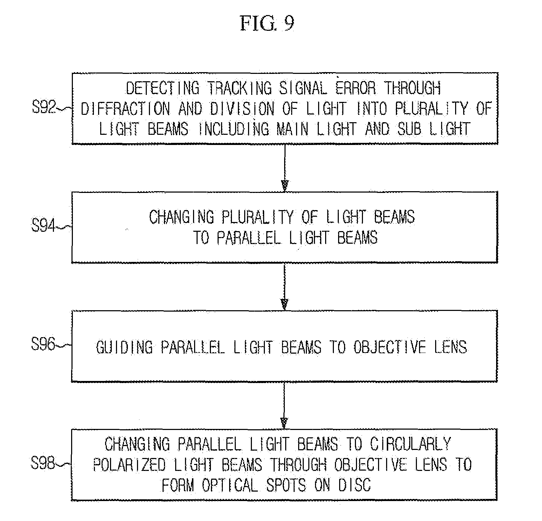

Referring to FIGS. 1-2 and 9, in operation S92, the light emitted from the light source 20 is diffracted and is divided into light beams, for example, three light beams including the 0 order light (main light) and ±1st order light (sub light) by the grating 51 to detect the tracking error signal. In operation S94, the three light beams are changed to parallel light beams by passing through the polarized light beam splitter 52 and the collimating lens 53, and, in operation S96 the parallel light beams can be guided to the objective lens 30, for example, by being reflected by the reflection mirror 54 and being directed to the objective lens 30. In operation S98, for example, parallel light beams are changed to circularly polarized light beams by passing through the quarter wave plate 59 located at a front side of the objective lens 30 and the circularly polarized light beams form optical spots on the signal recording layer of the disc 10 by passing through the objective lens 30.

In the optical pickup according to an embodiment of the present general inventive concept, an optic axis of the half wave plate 58 mounted between the polarized light beam splitter 52 and the collimating lens 53 is rotated by 30° to change the polarized state of the light incident to the collimating lens 53 through the polarized light beam splitter 52 to the elliptically polarized state, thereby allowing the optical spot formed on the disc 10 to become elliptically polarized light instead of circularly polarized light. In this case, ellipticity is set such that a spot diameter (FWHM) ratio becomes 1.

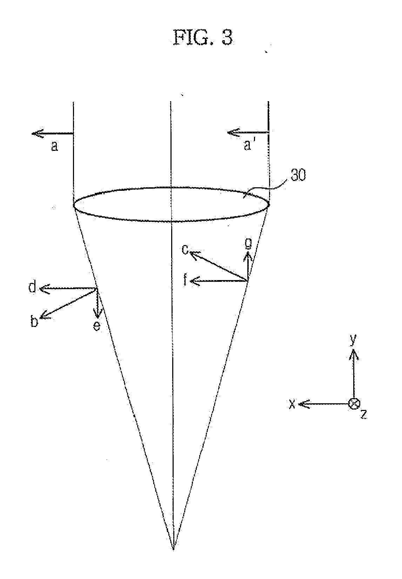

An influence of the linearly polarized light on the spot will be described with reference to FIGS. 3 to 6.

FIGS. 3 to 6 illustrate polarized states of the light beams in a vicinity of an outermost side according to the NA of the objective lens 30.

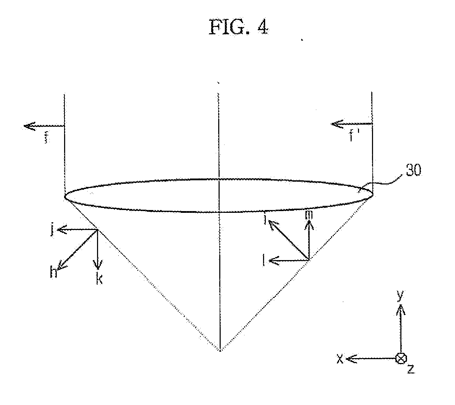

FIG. 3 is a view illustrating a state of focusing polarized light when a light beam incident to the objective lens 30 having a low NA vibrates in an x direction according to an embodiment of the present general inventive concept, and FIG. 4 is a view illustrating a state of focusing polarized light when a light beam incident to the objective lens 30 having a high NA vibrates in the x direction according to an embodiment of the present general inventive concept.

In FIGS. 3 and 4, the polarized states of the light beams incident to the objective lens 30 are represented by vectors a and a'(a=a') in the low NA and are represented by vectors f and f'(f=f') in the high NA. The vectors of the light beams which become convergent lights by transmitting through the objective lens 30 become a⇒b, a'⇒c, f⇒h and f'⇒i.

Here, if the vectors of b, c, h and i are represented in the x and y directions in FIGS. 3 and 4, b=d+e, c=f+g, h=j+k and i=l+m are obtained.

As illustrated from FIGS. 3 and 4, since y-direction components e and g and components k and m are opposite to each other in direction and are equal to each other in size, the respective components are cancelled at a time of forming the spot. Since the y-direction components are increased as the NA is increased, canceled components are increased according to an embodiment of the present general inventive concept. That is, the influence on the spot is increased.

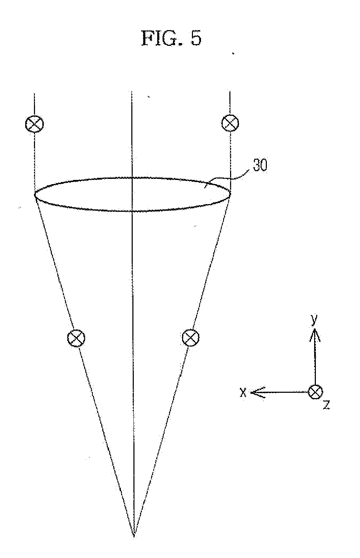

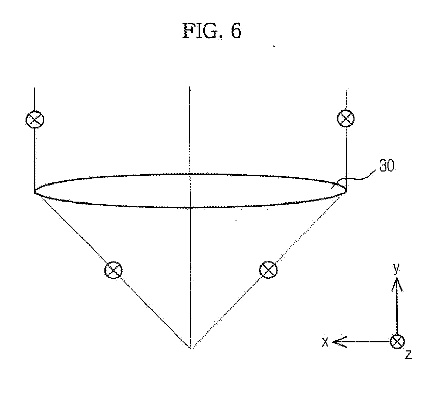

FIG. 5 is a view illustrating a state of focusing polarized light when a light beam incident to the objective lens 30 having a low NA vibrates in a z direction according to an embodiment of the present general inventive concept, and FIG. 6 is a view illustrating a state of focusing polarized light when a light beam incident to the objective lens 30 having a high NA vibrates in the z direction according to an embodiment of the present general inventive concept.

As illustrated from FIGS. 5 and 6, the polarized light which vibrates in the z direction is not influenced before and after transmitting through the objective lens 30.

In FIGS. 3 to 6, when the linearly polarized light is focused, attenuating components are generated in the light of the vibration direction of the polarized light. As the NA is increased, the attenuating components are increased. In contrast, attenuating components are not generated in the light of a direction orthogonal to the vibration direction. This difference changes the shape of the spot to the ellipse when the linearly polarized light is made incident. As the NA is increased, the degree of the ellipse is increased.

That is, when the linearly polarized light is focused by the objective lens 30, the polarized light, of which the vibration direction is perpendicular to a tangent line of the objective lens 30, is attenuated and the polarized light, of which the vibration direction is parallel to the tangent line of the objective lens 30 is not attenuated.

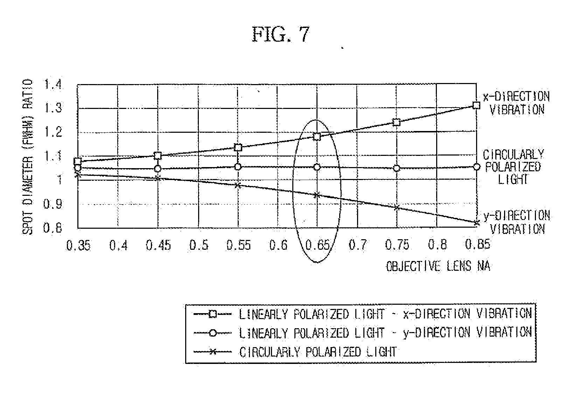

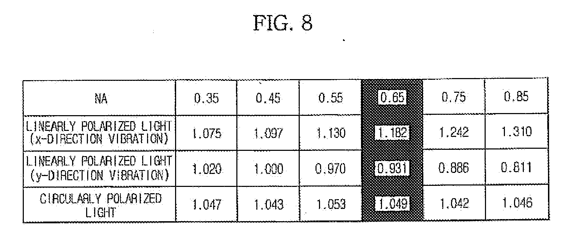

Next, in a case where an intensity distribution of the incident light is influenced by emission angle characteristics of the light source 20, the spot diameter (FWHM) ratio will be described with reference to FIGS. 7 and 8.

FIG. 7 is a graph illustrating a spot diameter (FWHM) ratio in the case where the intensity distribution of the incident light is influenced by the emission angle characteristics of a semiconductor laser according to an embodiment of the present general inventive concept, and FIG. 8 is a table illustrating the spot diameter (FWHM) ratio in the case where the intensity distribution of the incident light is influenced by the emission angle characteristics of the semiconductor laser.

In FIGS. 7 and 8, when the circularly polarized light is made incident, the elliptical shape of the spot is not changed regardless of the NA. The influence of a far-field pattern (FFP) of the light source 20 is corrected by changing the polarized light incident to the objective lens 30 to the elliptically polarized light.

The degree of the ellipse is influenced by the difference between the direction parallel to the tangent line of the objective lens 30 and the direction parallel to the tangent line of the objective lens 30. Since a focal length of the collimating lens 53 is as large as 20 mm, the spot substantially has a circular shape.

Here, the reason why the focal length of the collimating lens 53 is 20 mm is because the place where the focal length of the collimating lens is 20 mm is excellent in an S/N ratio from a relationship between a light emission output of the semiconductor laser and light use efficiency of an optical memory.

In FIGS. 7 and 8, when the linearly polarized light is made incident, a difference between the spot diameters (FWHM) in the x and y directions is increased as the NA is increased. Thus, the degree of the ellipse is increased. The direction of the major axis of the ellipse is equal to the vibration direction of the incident linearly polarized light.

As described above, the spot diameter (FWHM) ratio is influenced by the FFP of the semiconductor laser and thus is shifted from 1 by about 0.05 upward. The influence of the FFP of the semiconductor laser is corrected by changing the polarized light incident to the objective lens 30 having the high NA to the elliptically polarized light.

That is, when the circularly polarized light is made incident, the spot diameter (FWHM) ratio is 1.05. In contrast, when the elliptically polarized light is made incident, the spot diameter (FWHM) ratio is close to 1.

Since the DVD or the HD DVD has a NA of 0.65, the spot diameter (FWHM) ratio when the linearly polarized light is made incident is 1.13. Since the BD has a NA of 0.85, the spot diameter (FWHM) ratio when the linearly polarized light is made incident is 1.28. Since the spot diameter ratio has a substantially straight line shape if the NA is in a range of 0.65 to 0.85, the spot diameter (FWHM) ratio can be expressed by an approximation of 0.9NA+0.52.

The rotation angle of the quarter wave plate 59 corresponding to the spot diameter (FWHM) ratio of 1.05 becomes $0.05/(0.9NA+0.52-1) \times 90° = 0.05/(0.9NA-0.48) \times 90°$.

Since, for example, the optic axis of the quarter wave plate 59 is inclined by 45°, the setting angle of the optic axis of the quarter wave plate 59 is expressed by Equation 2.

Equation 2

$$45+0.05/(0.9NA-0.48) \times 90°$$

Accordingly, if the quarter wave plate 59 is rotated in a range of 45° to $[45+0.05/(0.9NA-0.48) \times 90]°$, the influence of the FFP of the light source 20 (semiconductor laser) can be corrected.

When the spot diameter (FWHM) ratio of a central design value is approximated to 1.0, reducing a variation in spot diameter (FWHM) ratio by about 5% is possible although the circularly polarized light changes to the elliptically polarized light due to a birefringence property of the disc 10 or the objective lens 30.

For example, since the DVD has a NA of 0.65, the rotation angle of the quarter wave plate is set to 43° from Equation 2 (the optic axis thereof is set to 45+43=88°). This is equal to an experimental value at the time of the reproduction of the disc 10 (FIG. 1) having the birefringence property.

The emission angle of the semiconductor laser has a manufacture deviation and thus slightly varies in a range of the deviation. Accordingly, the emission angle of the semiconductor laser is approximately set to the angle expressed by Equation 2.

The optical pickup according to an embodiment of the present general inventive concept is used in an apparatus to manufacture the disc 10 or a semiconductor exposure apparatus. Currently, the semiconductor laser is not used. However, with a short wavelength or a high output of the semiconductor laser, the semiconductor laser will be used in the light source 20 in the future.

The present general inventive concept can also be embodied as computer-readable codes on a computer-readable medium. The computer-readable medium can include a computer-readable recording medium and a computer-readable transmission medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present general inventive concept can be easily construed by programmers skilled in the art to which the present general inventive concept pertains.

Meanwhile, although, in various embodiments of the present general inventive concept, an angle of an optic axis of a half wave plate is rotated by 30° such that a spot on a disc becomes elliptically polarized light instead of circularly polarized light in an optical pickup of a DVD having an NA of 0.65, the present general inventive concept is not limited to this. Although an angle of a linearly polarized light of a semiconductor laser and an angle of an optic axis of a quarter wave plate, the angles of the optic axes of the half wave plate and the quarter wave plate, the angle of the linearly polarized light of the semiconductor laser, ellipticity of the quarter wave plate, or a difference between phase shift angles are changed, a same object and effect of the present general inventive concept can be obtained.

Although various embodiments of the present general inventive concept have been illustrated and described, it would be appreciated by those skilled in the art that changes may be made in these embodiments without departing from the principles and spirit of the general inventive concept, the scope of which is defined in the claims and their equivalents.

1. An optical pickup, comprising:

a light source to emit semiconductor laser light;
an objective lens to condense the light emitted from the light source and form an optical spot on a disc; and
a wave plate which is rotated such that the spot formed on the disc becomes elliptically polarized light.

2. The optical pickup according to claim 1, wherein the objective lens has a numerical aperture (NA) of 0.65 or more.

3. The optical pickup according to claim 1, wherein the wave plate comprises; a half wave plate of which an optic axis is rotated such that a diameter ratio of the spot formed on the disc becomes 1.

4. The optical pickup according to claim 3, wherein the half wave plate is provided on a light traveling path such that the optic axis thereof is maintained at a predetermined angle with respect to a polarization axis of the light incident to the disc.

5. The optical pickup according to claim 4, wherein the predetermined angle is substantially 30˚.

6. The optical pickup according to claim 4, wherein the predetermined angle is substantially 60˚.

7. The optical pickup according to claim 1, wherein a junction surface of the light source is set to be perpendicular to an information track recorded on the disc.

8. The optical pickup according to claim 7, wherein the wave plate comprises:

a quarter wave plate of which an optic axis is rotated such that a diameter ratio of the spot formed on the disc becomes 1.

9. The optical pickup according to claim 8, wherein the quarter wave plate is mounted at an angle greater than 45˚ and less than 90˚ with respect to the junction surface of the light source.

10. The optical pickup according to claim 8, wherein the quarter wave plate is mounted at an angle greater than 45˚ and less than [45+0.05/(0.9NA-0.48)×90]˚ with respect to the junction surface of the light source, wherein NA is a numerical aperture.

11. An optical pickup, comprising:

a wave plate having an adjustable angle to allow polarized light of a spot on a disc to become elliptically polarized light,
wherein a diameter ratio of the spot on the disc becomes substantially one.

12. The optical pickup according to claim 11, wherein the wave plate is rotated to change polarized light to the elliptically polarized light such that a shape of the spot formed on the disc is approximated to a circular shape.

13. A method of forming optical spots on a disc, the method comprising:

detecting a tracking signal error through diffraction and division of light into a plurality of light beams including a main light and a sub light;
changing the plurality of light beams to parallel light beams;
guiding the parallel light beams to an objective lens; and
changing the parallel light beams to circularly polarized light beams through the objective lens to form the optical spots on the disc.

14. A computer-readable recording medium having embodied thereon a computer program to execute a method, wherein the method comprises:

detecting a tracking signal error through diffraction and division of light into a plurality of light beams including a main light and a sub light;
changing the plurality of light beams to parallel light beams;
guiding the parallel light beams to an objective lens; and
changing the parallel light beams to circularly polarized light beams through the objective lens to form optical spots on a disc.

**Claims**

**1.** An optical pickup, comprising:

a light source to emit semiconductor laser light;
an objective lens to condense the light emitted from the light source and form an optical spot on a disc; and
a wave plate which is rotated such that the spot formed on the disc becomes elliptically polarized light.

2. The optical pickup according to claim 1, wherein the objective lens has a numerical aperture (NA) of 0.65 or more.

3. The optical pickup according to claim 1, wherein the wave plate comprises:

a half wave plate of which an optic axis is rotated such that a diameter ratio of the spot formed on the disc becomes 1.

4. The optical pickup according to claim 3, wherein the half wave plate is provided on a light traveling path such that the optic axis thereof is maintained at a predetermined angle with respect to a polarization axis of the light incident to the disc.

5. The optical pickup according to claim 4, wherein the predetermined angle is substantially 30°.

6. The optical pickup according to claim 4, wherein the predetermined angle is substantially 60°.

7. The optical pickup according to claim 1, wherein a junction surface of the light source is set to be perpendicular to an information track recorded on the disc.

8. The optical pickup according to claim 7, wherein the wave plate comprises:

a quarter wave plate of which an optic axis is rotated such that a diameter ratio of the spot formed on the disc becomes 1.

9. The optical pickup according to claim 8, wherein the quarter wave plate is mounted at an angle greater than 45° and less than 90° with respect to the junction surface of the light source.

10. The optical pickup according to claim 8, wherein the quarter wave plate is mounted at an angle greater than 45° and less than $[45+0.05/(0.9NA-0.48)\times 90]°$ with respect to the junction surface of the light source, wherein NA is a numerical aperture.

11. An optical pickup, comprising:

a wave plate having an adjustable angle to allow polarized light of a spot on a disc to become elliptically polarized light,
wherein a diameter ratio of the spot on the disc becomes substantially one.

12. The optical pickup according to claim 11, wherein the wave plate is rotated to change polarized light to the elliptically polarized light such that a shape of the spot formed on the disc is approximated to a circular shape.

13. A method of forming optical spots on a disc, the method comprising:

detecting a tracking signal error through diffraction and division of light into a plurality of light beams including a main light and a sub light;
changing the plurality of light beams to parallel light beams;
guiding the parallel light beams to an objective lens; and
changing the parallel light beams to circularly polarized light beams through the objective lens to form the optical spots on the disc.

14. A computer-readable recording medium having embodied thereon a computer program to execute a method, wherein the method comprises:

detecting a tracking signal error through diffraction and division of light into a plurality of light beams including a main light and a sub light;
changing the plurality of light beams to parallel light beams;
guiding the parallel light beams to an objective lens; and
changing the parallel light beams to circularly polarized light beams through the objective lens to form optical spots on a disc.

FIG. 1

FIG. 2

FIG. 3

FIG. 4

FIG. 5

FIG. 6

FIG. 7

FIG. 8

| NA | 0.35 | 0.45 | 0.55 | 0.65 | 0.75 | 0.85 |
|---|---|---|---|---|---|---|
| LINEARLY POLARIZED LIGHT (x-DIRECTION VIBRATION) | 1.075 | 1.097 | 1.130 | 1.182 | 1.242 | 1.310 |
| LINEARLY POLARIZED LIGHT (y-DIRECTION VIBRATION) | 1.020 | 1.000 | 0.970 | 0.931 | 0.886 | 0.811 |
| CIRCULARLY POLARIZED LIGHT | 1.047 | 1.043 | 1.053 | 1.049 | 1.042 | 1.046 |

FIG. 9

S92 — DETECTING TRACKING SIGNAL ERROR THROUGH DIFFRACTION AND DIVISION OF LIGHT INTO PLURALITY OF LIGHT BEAMS INCLUDING MAIN LIGHT AND SUB LIGHT

S94 — CHANGING PLURALITY OF LIGHT BEAMS TO PARALLEL LIGHT BEAMS

S96 — GUIDING PARALLEL LIGHT BEAMS TO OBJECTIVE LENS

S98 — CHANGING PARALLEL LIGHT BEAMS TO CIRCULARLY POLARIZED LIGHT BEAMS THROUGH OBJECTIVE LENS TO FORM OPTICAL SPOTS ON DISC

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000331369 A

- JP 2004063069 A